(19) Europäisches Patentamt
European Patent Office
Office européen des brevets

(11) Publication number: **0 145 843**
**A2**

(12) # EUROPEAN PATENT APPLICATION

(21) Application number: **84110054.8**

(22) Date of filing: **23.08.84**

(51) Int. Cl.⁴: **H 01 M 4/60**, H 01 B 1/12, C 09 D 5/44, C 08 J 7/04

(30) Priority: **14.12.83 US 560886**

(43) Date of publication of application: **26.06.85**
**Bulletin 85/26**

(84) Designated Contracting States: **AT DE FR GB IT LU**

(71) Applicant: **W.R. GRACE & CO., Grace Plaza 1114 Avenue of the Americas, New York New York 10036 (US)**

(72) Inventor: **Roberts, William Peyton, 5844 Morningbird Lane, Columbia Maryland 21045 (US)**

(74) Representative: **UEXKÜLL & STOLBERG Patentanwälte, Beselerstrasse 4, D-2000 Hamburg 52 (DE)**

(54) **Electrically conductive composites comprising p-doped acetylene having conductive coatings and conjugated aromatic polymers and process therefor.**

(57) This invention is directed to electrically conductive composites comprising a p-doped acetylene polymer having conductive coatings of conjugated aromatic polymers, particularly polypyrrole and polythiophene. The coatings are applied by an electrochemical deposition process which is either simultaneous with, or subsequent to, electrochemical p-doping of the acetylene polymer. The composite materials can exhibit greater environmental stability than does the p-doped acetylene polymer per se.

EP 0 145 843 A2

## BACKGROUND OF THE INVENTION

### 1. Field of the Invention

This invention relates to a process for forming electrically conductive composites. More particularly, this invention relates to electrically conductive composites comprising a p-doped acetylene polymer having a conductive coating of polypyrrole or polythiophene, said coatings being applied by an electrochemical deposition process.

### 2. Description of the Prior Art

Doped polymers such as polyacetylene are known in the art. That is, semi-conducting acetylene polymers can be chemically doped in a controlled manner with electron acceptor and/or electron donor dopants to produce p-type and n-type electrically conducting doped acetylene polymers. Such doping procedures and the resultant doped acetylene polymers are described in U. S. 4,222,903 and 4,204,216. Further, a reversible, electrochemical method for modifying the electrically conductive properties of an organic polymer, which is dopable with an anionic dopant to a more highly electrically conductive state, which polymer can be used in secondary batteries, is taught in U. S. 4,321,114. British Patent 1,216,549 also teaches that polypyrrole is a conductive polymer. U. S. 4,228,060 describes preparation of polyacetylenes useful as electrical conductors when doped.

The problem with the prior art doped acetylene polymers is that they are environmentally unstable. That is, they are subject to oxidative degradation and instability in presence of air, moisture and certain common chemcials. This results in loss of conductivity.

## OBJECTS OF THE INVENTION

One object of the invention is to prepare a highly conductive acetylene polymer having improved environmental

stability. Another object of the invention is to provide a polymerization procedure, in accordance with the proceeding object, whereby a composite of two electrically conductive polymers is formed. A still further object of the invention, in accordance with the proceeding objects, is to provide a composite. Yet another object of this invention, in accordance with the proceeding objects is to provide a composite which is electrically conductive. Other objects will become apparent from a reading hereinafter.

## DESCRIPTION OF THE INVENTION

This invention relates to a process whereby an acetylene polymer when attached to a positive current source and immersed in an electrolyte containing a species dissociable into dopant anions and an oxidizable, polymerizable aromatic compound, is converted to a conductive composite of p-doped acetylene polymer and a p-doped aromatic polymer such as polypyrrole (I) or polythiophene (II):

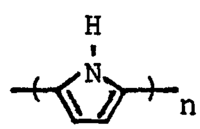

I

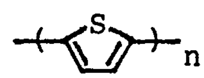

II

The conductivity of the resultant materials varies from $10^{-3}$ - $10^{3}$ Siemens/cm depending upon the extent of p-doping of polyacetylene and the nature and thickness of the aromatic polymer coating. These composite materials, particularly the polypyrrole coated polyacetylene composite exhibits enhanced environmental stability when compared with electrochemically doped polyacetylene, per se, of comparable conductivity.

The procedure is carried out by providing an electrolytic cell wherein the anode includes the polyacetylene either per se or previously doped and the

electrolyte comprises an oxidizable, polymerizable aromatic compound and a compound which is ionizable into one or more species of dopant ions of the anionic type. When an electrical potential sufficient to cause electrolysis of the electrolyte is applied to the electrolytic cell, the polyacetylene becomes p-doped with dopant ions to a degree proportional with the voltage and time period of the applied potential and the dopant ion concentration in the electrolyte. The typically accessible degree of doping is from 0.01 to 0.20 mole of dopant per -CH- unit of polyacetylene providing the resulting doped polymer with an electrical conductivity of from about $10^{-3}$ to $10^{3}$ Siemens/cm. Simultaneously with, and/or subsequent to, the p-doping of the polyacetylene, the aromatic compound present in the electrolyte is oxidatively polymerized onto the polyacetylene anode and this polymer too becomes p-doped. The thickness of this coating may be varied in proportion to the voltage and time period of coating as well as the concentration and nature of the aromatic compound in the electrolyte. Typically accessible coating thicknesses (expressed as weight percent of the original weight of polyacetylene employed) are from below 1% to above 100%.

The polymer which can be used as a substrate material in the electrochemical doping and coating procedure described herein is an acetylene polymer. The term "acetylene polymer" as used herein means polyacetylene, i. e., $(CH)_x$, and substituted polyacetylenes in which at least some of the hydrogen atoms on the polymer chain have been replaced by halogen, alkyl (e. g., up to about 20 carbon atoms), aryl (e. g., phenyl, halophenyl or alkylphenyl) or combinations thereof. Such acetylene polymers may sutiably be prepared for use in the present invention in the form of films, foams, compressed films or

compressed powders, by methods known in the art. For example, the synthesis of high quality, uniformly thin, flexible polycrystaline films of polyacetylene and their characterization are described in detail in a series of papers by Shirakawa et al [Polymer Journal, Vol. 2, No. 2, pp. 231-244 (1971); Polymer Journal, Vol. 4, No. 4, pp. 460-462 (1973); Journal of Polymer Science, Part A-1, Polymer Chemistry Edition, Vol. 12, pp. 11-20 (1974) and Journal of Polymer Science, Part A-1, Polymer Chemistry Edition, Vol. 13, pp. 1943-1950 (1975)], all of which are incorporated herein by reference. The synthesis procedures described by Shirakawa et al involve polymerizing acetylene monomers in the presence of a $Ti(OC_4H_9)_4-Al(C_2H_5)_3$ catalyst system, employing a critical catalyst concentration to avoid the formation of polyacetylene powder to obtain, depending on the polymerization temperature, polycrystalline polyacetylene films having an all cis structure (polymerization temperatures lower than -78°C), an all trans structure (polymerization temperatures higher than 150°C) or a mixed cis-trans structure (polymerization temperatures between -78°C and 150°C).

While the acetylene polymer used in the present invention is preferably in the form of films, prepared as described above, it may also suitably be in the form of compressed powders prepared, for example, as described by Berets et al, Trans. Faraday Soc., Vol. 64, pp. 823-828 (1968), incorporated herein by reference or in the form of foams or compressed films prepared from intermediate gels, as described by Wnek et al, Polymer Preprints, Vol. 20, No. 2, pp. 447-457, September, 1979, also incorporated herein by reference.

The teaching in regard to the p-dopant and the electrochemical doping procedure used herein is the same

as that disclosed in U. S. 4,321,114 incorporated herein by reference. That is, in accordance with the electrochemical doping procedure of the present invention, p-type doping of the acetylene polymer is effected with anionic dopant ions. A wide variety of dopant ion species may suitably be employed, either individually or in combination, for effectively modifying the room temperature electrical conductivity of the acetylene polymer in accordance with the present invention.

Suitable anionic dopant ions for effecting p-type doping include, for example, $I^-$, $Br^-$, $Cl^-$, $F^-$, $ClO_4^-$, $PF_6^-$, $AsF_6^-$, $AsF_4^-$, $SO_3CF_3^-$, $BF_4^-$, $BCl_4^-$, $NO_3^-$, $POF_4^-$, $CN^-$, $SiF_5^-$, $CH_3CO_2^-$ (acetate), $C_6H_5CO_2^-$ (benzoate), $CH_3C_6H_4SO_3^-$ (tosylate), $SiF_6^{--}$, $SO_4^{--}$ or the like.

Each of the anionic dopant ion species set foth above will affect an increase, to varying degrees, in the room temperature electrical conductivity of the starting acetylene polymer. For the widest range in selectivity as to achievable conductivities, the preferred anionic dopant ions are halide ions, $ClO_4^-$, $PF_6^-$, $AsF_6^-$, $AsF_4^-$, $SO_3CF_3^-$ and $BF_4^-$. Furthermore, these same anionic dopant ions are suitable in the same manner as dopant ions for the conjugated aromatic polymers which are deposited onto the polyacetylene anode according to the present invention.

A compound which is ionizable into one or more species of the above described dopant ions is employed as the active material of the electrolyte of the electrolytic cell in carrying out the electrochemical doping procedure in accordance with the present invention and thereby serves as the dopant ion source. For example, for use in carrying out p-type doping with an anionic species of dopant ions, the ionizable compound of the anionic dopant

ion species may suitably be a tetraalkyl ammonium salt, a tetraalkyl phosphonium salt, a tetraalkyl arsonium salt or a trialkyl oxonium salt, wherein the alkyl groups typically contain from one to ten carbon atoms. The ionizable compound, which is used as the active electrolyte material of the electrolytic cell in carrying out the electrochemical doping procedure in accordance with the present invention, is in a suitable solvent which is inert with respect to the electrode material and which will permit the migration of the dopant ions to the electrode-active materials. Suitable solvents for use in preparing electrolyte solutions include water, methylene chloride, acetonitrile, alcohols (e. g., ethyl alcohol), ethers (e. g., monoglyme or diglyme), cyclic ethers (e. g., tetrahydrofuran or dioxane), hexamethylphosphoramide, propylene carbonate, methyl acetate, tetramethylene sulfone or the like. The concentration of the ionizable compound when employed in the form of an electrolyte solution may suitably be within the range of from about 0.1 to about 2.0 molar. The solutions of lower molarity are preferably employed when the doped polymer being prepared is to have a relatively low room temperature electrical conductivity, while the solutions of higher molarity are preferably employed when such doped polymer is to have a relatively high conductivity.

The oxidatively polymerizable aromatic compound (the monomer) may be any compound which exhibits electrochemical oxidation/polymerization/p-doping processability and which produces a conductive coating at the anode under conditions that are comparable to those employed in the electrochemical p-doping of polyacetylene which is taught in U. S. 4,321,114 and incorporated herein by reference. More specifically, the monomer may be any compound which exhibits an electrochemical

oxidation/polymerization/p-doping process and which produces a conductive coating at the anode when the applied potential at the anode is within the approximate range 0.0 to +1.5 volts vs. the saturated calomel electrode (SCE), this being the most suitable potential range for electrochemical p-doping of polyacetylene as described herein. Examples of some suitable monomers based on these criteria are: pyrrole, 3-methyl pyrrole, 3,4-dimethylpyrrole, 2,2'-bithiophene, 2,2'-bifuran, indole, azulene and other substituted analogues of these compounds. Mixtures of two or more suitable monomers with similar oxidation potentials may also be employed in the instant invention. It may also be noted that furan and thiophene are examples of oxidizable, polymerizable monomers which are not suitable for electrochemical deposition onto polyacetylene based on these criteria because their oxidation potentials are above the suitable oxidation potential range of polyacetylene giving the result that their electrochemical polymerization onto polyacetylene, if it could be effected, would be accompanied by electrochemical degradation of the polyacetylene. See Examples 9 and 10 herein.

In assembling the electrolytic cell for carrying out the electrochemical doping procedure in accordance with the present invention, the acetylene polymer to be doped is employed as the electrode-active material of the anode. The cathode may suitably comprise any metal which is inert to the electrolyte employed, such as, for example, platinum, aluminum, palladium, ruthenium, rhodium, gold, iridium, lithium, sodium or the like.

The electrical energy source for powering the electrolytic cell in carrying out the electrochemical doping and polymerization procedure in accordance with the present invention may suitably be any DC power supply,

such as, for example, a battery, which is capable of delivering an electrical potential sufficiently high to initiate electrochemical oxidation of the acetylene polymer, or electron transfer from and/or to the polymer, but sufficiently low so as not to produce electrochemical degradation of the polymer. Such electrical potential may suitably be, for example, within the range of from about 2 to 25 volts, with about 6-9 volts being found to be particularly suitable.

If a reference electrode is present in the cell and a variable potentiostat is employed, then the potential of the anode (with respect to the reference electrode) may be fixed in a manner independent of the potential of the cathode. In such case, an applied anodic potential of +0.0 to +1.5 volts vs. the saturated calomel electrode (SCE) is found to be particularly suitable for p-doping of polyacetylene.

For producing a conductive polyacetylene composite according to the present invention, an electrolytic cell is first assembled containing all of the elements described above, namely: an anode consisting of polyacetylene as the electroactive material and a cathode consisting of any material which is suitably inert, these electrodes being immersed in an electrolyte solution which contains an oxidizable, polymerizable aromatic compound and a substance which can be ionized into dopant anions. The anode and cathode are connected to a D. C. power supply and a potential is applied which is sufficient to bring about p-doping of the polyacetylene. As p-doping proceeds, electrons are removed from the polyacetylene and the resulting positive charge is compensated by migration of dopant anions into the polyacetylene. As the polyacetylene becomes p-doped, it becomes sufficiently conductive to act as an electrode for the oxidation of the

aromatic compound in the electrolyte. Continued oxidation of the aromatic compound in the electrolyte leads to its polymerization and its deposition as an insoluble polymer onto the p-doped polyacetylene surface. This conjugated aromatic polymer also becomes p-doped as it is formed. The conductivity of the resulting composite is generally slightly less than, or equal to, the conductivity of polyacetylene which is electrochemically p-doped under the same conditions in the absence of a polymerizable aromatic compound. The range of accessible conductivities is thus about $10^{-3}$ to $10^{3}$ Siemens/cm. While both the polyacetylene and the aromatic polymer coating are p-doped by this process, the extent of p-doping (i. e., weight percent of dopant) and the conductivity in each material are not expected to be the same.

While the p-doping and coating of polyacetylene can be performed as a continuous single process as described above and in examples herein, it is also possible to separate the p-doping and the electrochemical coating of polyacetylene into two separate processes whereby the polyacetylene used in the electrode set-up described above has been pre-doped either electrochemically or chemically prior to its exposure to the electrolyte which contains the aromatic monomer.

The thickness of the coating is controllable over a wide range, from below 1% of the original weight of undoped polyacetylene to over 100% of this weight. Control over the thickness of the coating depends upon the concentration of the aromatic compound in the electrolyte, the electrical potential which is applied at the anode, the duration of the applied electrical potential (typically from 5 minutes to 2 hours), the composition of the electrolyte, and the nature of the coating itself. In regard to the nature of the coating, the ability to form

thick coatings is dependent on the electrical conductivity of the coating as it is formed. Thus, an insulative coating will not grow much in thickness because it will act as a barrier to further oxidation of the aromatic compound in the electrolyte.

Application of these coatings to polyacetylene, unlike the p-doping of polyacetylene, is not electrochemically reversible. The extent of p-doping in the conductive composites may however be modified after the coating is applied. For example, by changing the electrical potential of the anode to a value which is less positive than that at which the coating took place, some of the dopant ions in the composite will migrate back out of the material as its overall oxidation state is lowered. This serves to decrease the extent of p-doping in the composite after it has been formed.

If the conductive aromatic polymer coating has good stability towards oxygen and moisture and can act as a barrier towards oxygen and moisture, then the conductivity of these coated materials will be maintained for a longer time than the conductivity of p-doped polyacetylene alone under ambient conditions. Such coatings, because they are conductive, represent a method of stabilization of polyacetylene which does not isolate the material electrically.

This invention is not limited to stabilization of polyacetylene. Since the coating procedure detailed herein produces an interface between two different organic conductors, at least one of which (polyacetylene) may serve as a semiconductor, this procedure may be applied to the production of semiconductor junction devices based on organic conductors as well.

Electrical potential values given are all relative to the saturated calomel electrode (SCE) as 0.0 V. All

conductivity values were determined by an in-line four-probe measurement using platinum leads attached to the samples (thin films) with a carbon-based Electrodag(R) adhesive. Unless otherwise specified, all solvents used were distilled from a suitable dessicant and degassed prior to use. Percent doping figures given are defined as mole percent of dopant ions per repeat unit of polymer (-CH- in the case of polyacetylene).

The following examples are set out to explain, but expressly not limit the instant invention. Unless otherwise noted, all parts and percentages are by weight.

Example 1

A polyacetylene film was prepared as follows.

A cylindrical glass reaction vessel (6 cm dia. x 20 cm) was evacuated, filled with argon, and charged with 20 ml of dry, degassed toluene and 1.7 ml (5.0 millimoles) of titanium tetrabutoxide. The solution was cooled at -78°C and 2.7 ml (20.0 millimoles) triethylaluminum was added with stirring. The resulting catalyst solution was briefly degassed by evacuation, then aged at room temperature for 1 hour under static vacuum, cooled to -78°C again and degassed under dynamic vacuum for 0.5 hour. The reactor vessel was agitated so that its walls were coated with catalyst, then the reactor held at -78°C and filled with acetylene by connection to a bulb containing 1 litre of acetylene at 700 mm Hg pressure. After 20 minutes, the acetylene pressure in the system had gone below 100 mm Hg and a silvery red film of polyacetylene coated the reactor walls. The reactor was evacuated to stop the polymerization, filled with argon, and opened. Excess catalyst was removed from the reactor bottom with a syringe, then the vessel was sealed, evacuated, and connected to a sidearm chamber containing 40 ml dry, degassed pentane frozen at -196°C. The reactor

and sidearm chamber were evacuated and sealed, then the pentane was allowed to distill into the (-78°C) reactor vessel, rinsing residual catalyst from the polyacetylene. The pentane was then poured back into the side chamber. This distillation procedure was repeated 15-25 times, then the side chamber was removed and the reactor was evacuated, filled with argon, opened, and the polyacetylene removed. The film thus obtained (approx. 0.1 mm thick) was cut into 2.0 cm strips and stored at -20°C under argon.

Example 2

An electrochemical cell was assembled wherein the anode consisted of a 2 x 2 x 0.015 cm piece of polyacetylene film (22 mg) prepared as in Example 1, wrapped at one end with a platinum wire. The cathode consisted of a strip of aluminum foil. The electrolyte consisted of a solution of tetraethylammonium perchlorate (0.1 M) and pyrrole (0.06 M) in acetonitrile (reagent grade). The two electrodes were separated by a medium porosity glass frit. Within 5 minutes after the electrodes were connected to a 6V battery, a brown coating of polypyrrole was deposited on the platinum wire in the anode compartment. Within 30 minutes, this brown coating began to extend onto the polyacetylene film. After 4 hours, a thick coating of polypyrrole covered the entire polyacetylene surface. This coated polyacetylene was removed, rinsed with acetonitrile and dried under a vacuum. Its conductivity was 40 Siemens/cm. Elemental analysis and weight gain indicated the following empirical formula:

$$(CH)_{1.00}(C_4H_3N)_{0.30}(ClO_4)_{0.23}$$

Example 3

An electrochemical cell was assembled as in Example 2. The anode consisted of a 2 x 2 x 0.015 cm piece of polyacetylene (22 mg) pressed between two layers of platinum screen. The cathode consisted of a strip of aluminum foil. The electrolyte consisted of a solution of tetrabutylammonium perchlorate (0.1 M) in methylene chloride (reagent grade). Within 2 hours after the electrodes were connected to a 9V battery, the polyacetylene developed a golden color and a weight gain of 54% indicative of 7.1% doping by perchlorate ions. The conductivity of this sample was 48 Siemens/cm. The sample was wrapped at one end with platinum wire to form the anode for a second electrolysis, this time with a solution of tetrabutylammonium perchlorate (0.1 M) and pyrrole (0.06 M) in methylene chloride as electrolyte. Within 2 hours after the electrodes were connected to a 6V battery, a dark brown polypyrrole coating had deposited over the entire polyacetylene surface. The weight gain over this second step was 165%. The conductivity of the coated material was 14 Siemens/cm.

Example 4

An electrochemical cell was assembled wherein the anode consisted of a loop of polyacetylene (2 x 6 x 0.01 cm) compressed at the ends between two layers of platinum screen. In the center of the loop of polyacetylene was the cathode, consisting of a piece of platinum screen inside a coarse-frit gas dispersion tube. The electrolyte consisted of a solution of lithium perchlorate (0.3 M) in propylene carbonate. A capillary tube filled with electrolyte was run from the electrochemical cell (near the anode) to a glass tube containing a silver/silver nitrate/acetonitrile reference electrode (+0.30 V vs. Saturated Calomel Electrode). The

three electrodes were connected to a potentiostat power supply. A potential of +0.85 V(vs. SCE) was applied to the anode. The current rose rapidly to a maximum of about 50 mA in 10 minutes, then began to decline. The doping was stopped after 20 minutes and the polyacetylene removed, rinsed with acetonitrile, and dried under vacuum. The weight gain of the polyacetylene was 31%, indicative of 4.1% doping by perchlorate ions. The sample conductivity was 300 Siemens/cm.

Example 5

A (0.7 x 2.5 cm) piece of the doped polyacetylene from Example 4 was attached to a platinum wire at one end and immersed up to the platinum wire in a solution of lithium perchlorate (0.3 M) in acetonitrile. The same cathode and reference electrodes as described in Example 4 were employed, then the polyacetylene was electrolyzed at +0.85 V for 5 minutes. To the electrolyte solution (30 ml) was added 0.19 ml (3.0 mmoles) pyrrole and the potential at the anode was held at +0.90 V for 1 hour. A reddish-brown color appeared at the polyacetylene and in the surrounding electrolyte, and the current was fairly steady at 2.3 mA. The polyacetylene was removed, rinsed with acetonitrile, and dried under vacuum. A weight gain of 125% over the original doped material was obtained. The coated material was flexible and brown-silver in color. The sample conductivity was 44 Siemens/cm.

Example 6

A sample of the doped, uncoated polyacetylene from Example 4 and a sample of the doped, polypyrrole-coated polyacetylene from Example 5 were each mounted onto four platinum wires for conductivity measurement and left at ambient for 10 days, then immersed in distilled water for 1 day. The conductivity of each sample was monitored over this period and the results are shown in TABLE I.

TABLE I

| Time (hours) | Conductivity (Siemens/cm) p-doped, uncoated polyacetylene Air | Water* | p-doped, polypyrrole-coated polyacetylene Air | Water* |
|---|---|---|---|---|
| 0 | 303 | | 44 | |
| 100 | 152 | | 44 | |
| 150 | 119 | | 39 | |
| 250 | 67 | | 34 | |
| 0.1 | | 2.8 | | 21 |
| 1.6 | | 0.04 | | 16 |
| 6.0 | | 0.001 | | 14 |
| 24.0 | | - | | 4.4 |

*Samples were dried before each conductivity measurement.

A greater than 10,000-fold stability enhancement in the polypyrrole polyacetylene composite is evident from the water-exposure results.

Example 7

An electrochemical cell was set up wherein the anode consisted of a disc of polyacetylene (0.10 mm thick) against a disc of platinum foil in contact with a copper electrode, all sealed in a teflon holder such that only a 1 $cm^2$ circular area (shiny side) of the polyacetylene was exposed. The cathode was a piece of platinum screen, seperated from the anode compartment by a medium glass frit. A reference electrode was connected to the anode compartment as described in Example 4. The electrolyte was a solution of lithium perchlorate (0.2 M) in acetonitrile. The electrodes were connected to a potentiostat power supply and a potential of +1.10 V

applied to the anode for 30 minutes. The current reached a maximum of 8 mA during this period. The polyacetylene became golden in color and buckled due to swelling of the doped region. The electrolysis was briefly discontinued, and 100 mg (0.60 mmole) 2,2'-bithiophene was added to the anode chamber (20 ml volume) with stirring. A potential of +1.10 V was applied to the polyacetylene anode for an additional 20 minutes. The polyacetylene surface became blue-black and non-reflective. The coated sample was removed, rinsed with acetonitrile, and dried under vacuum. Weight gain and elemental analysis indicated the following empirical formula for the exposed region of the polyacetylene/polythiophene composite (which had been coated on one side only):

$$(CH)_{1.00}(C_4H_2S)_{0.020}(ClO_4)_{0.085}$$

Example 8

Polyacetylene (0.06 mm thickness) was placed in an electrochemical cell as described in Example 7. The electrolyte in the anode and cathode compartments was a solution of lithium perchlorate (0.3 M) in acetonitrile. The anode compartment (20 ml volume) also contained 100 mg (0.60 mmole) of added 2,2'-bithiophene. A potential of +1.0 V was applied to the polyacetylene anode for 10 minutes, then a potential of +1.1 V was applied for 10 minutes. Maximum current at 1.1 V was 10 mA, and the final current level was 7 mA. The resulting blue-green polythiophene-coated polyacetylene sample was removed, rinsed with acetonitrile, and dried under vacuum. The weight gain in the exposed region of the polyacetylene was 137%, and the conductivity of the composite (electrodes attached to coated side) was 270 Siemens/cm.

Example 9

Using the same electrochemical cell as described in Example 7, polyacetylene (0.06 mm thickness) was doped at an electrical potential of +1.6 V for 10 minutes. A maximum current of 32 mA was reached rapidly, and the polyacetylene turned golden and buckled due to swelling. Then, as the current rapidly fell to about 15 mA, the polyacetylene took on a shiny brown-black appearance. The polyacetylene film was rinsed with acetonitrile and dried under vacuum. The weight gain in the exposed region of the polyacetylene was 226%, indicative of about 30% doping of the polymer by perchlorate ions. The sample was apparently decomposed as evidenced by its appearance and brittleness (too brittle for conductivity measurement).

Example 10

Polyacetylene (0.06 mm thickness) was doped as described in Example 9, but in an electrolyte containing thiophene (0.06 M). A maximum current of 25 mA was reached, which rapidly declined to 15 mA, then declined much more slowly. The polyacetylene darkened as in Example 9, and a deep blue-grey color appeared in the electrolyte near the polyacetylene, indicative of thiophene oxidation. The polyacetylene was removed, rinsed with acetonitrile and dried under vacuum. The weight gain in the exposed region of the polyacetylene was 175%, somewhat less than that exhibited in Example 9, where doping was carried out at the same potential in the absence of thiophene.

Neither weight gain nor appearance provided any indication that the sample was coated with a poly(thiophene) film similar to that of Examples 7 and 8. The sample was too brittle for conductivity measurement.

I CLAIM:

1. An electrically conductive p-doped composite comprising acetylene polymer coated with a conjugated aromatic polymer polymerized from monomer units having an oxidation potential in the range 0.0 to 1.5 volts v. the saturated calomel electrode.

2. The composite of Claim 1 comprising polyacetylene coated with polypyrrole.

3. The composite of Claim 1 comprising polyacetylene coated with polythiophene.

4. The process of forming an electrically conductive p-doped polymer composite which comprises subjecting an electrode of an acetylene polymer in an electrolytic cell to a positive potential sufficient to cause p-doping of the acetylene polymer while immersed in an electrolyte containing a species dissociable into dopant anions and a conjugated aromatic monomer having an oxidation potential in the range 0.0 to 1.5 volts v. the saturated calomel electrode for a period sufficient to polymerize said conjugated aromatic monomer on the acetylene polymer thereby forming a composite and p-dope said composite.

5. The process according to Claim 4 wherein the anode is polyacetylene and the conjugated aromatic monomer is a member of the group consisting of pyrrole, 2,2'-bithiophene and mixtures thereof.

6. The process according to Claim 4 wherein the anode is p-doped polyacetylene and the conjugated aromatic monomer is a member of the group consisting of pyrrole, 2,2'-bithiophene and mixtures thereof.